# EUROPEAN PATENT APPLICATION

(11) **EP 4 687 188 A1**
(43) Date of publication of application: **04.02.2026**
(21) Application number: 25167840.5
(22) Date of filing: 01.04.2025
(51) Int. Cl.: H01M 10/04, H01M 50/204, H01M 50/262

(54) **BATTERY CASE, BATTERY PACK, AND METHOD OF MANUFACTURING BATTERY CASE**

(30) Priority: 31.07.2024 KR 20240102164
(71) Applicant: SAMSUNG SDI CO., LTD., Yongin-si, Gyeonggi-do 17084 (KR)
(72) Inventor: PARK, Sanghun, 17084 Yongin-si (KR)
(74) Representative: Marks & Clerk LLP

(57) **Abstract**

A battery case, a battery pack including the battery case, and a method of manufacturing the battery case are disclosed. The battery case is a battery case that accommodates a plurality of battery cells, and may include a first case including a hook and a second case including a hook hole into which the hook is inserted when the first and second cases are fastened together. The second case may include a support part that supports the hook after the hook is inserted into the hook hole.

## Description

### FIELD

The present disclosure relates to a battery case, a battery pack including the battery case, and a method of manufacturing the battery case, and more particularly, to a battery case including a support part that supports a hook after the hook and a hook hole are fastened, a battery pack including the battery case, and a method of manufacturing the battery case.

### BACKGROUND

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly comprising a positive electrode and a negative electrode, a case that accommodates the electrode assembly, and a terminal part connected to the electrode assembly.

A battery pack including a plurality of secondary batteries accommodates a plurality of battery cells in a battery case that protects the plurality of battery cells. In general, such a battery case is divided into an upper case and a lower case and completed by accommodating battery cells in the upper case and the lower case and fastening the upper case and the lower case through an assembly process.

However, when an impact is applied to the battery pack that is coupled in such a way, there is a problem in that the fastening of the upper case and the lower case is frequently released and thus dismantling of the battery pack occurs.

The above information disclosed in this Background section is for enhancement of understanding of the background of the present disclosure, and therefore, it may contain information that does not constitute related (or prior) art.

### SUMMARY

Embodiments described herein provide a battery case including a support part that supports a hook after the hook and a hook hole are fastened, a battery pack including the battery case, and a method of manufacturing the battery case. However, the technical problem to be solved by the present disclosure is not limited to the above problem, and other problems not mentioned herein, and aspects and features of the present disclosure that would address such problems, will be clearly understood by those skilled in the art from the description of the present disclosure herein.

A battery case according to embodiments of the present disclosure is a battery case that accommodates a plurality of battery cells, and may include a first case including a hook and a second case including a hook hole into which the hook is inserted when the first and second cases are fastened together. The second case may include a support part that supports the hook after the hook is inserted into the hook hole.

In embodiments, the support part may support the hook on a rear surface of the hook when the hook is inserted into the hook hole.

In embodiments, the support part may have a shape such that the support part is curved in a direction in which the hook is inserted into the hook hole.

In embodiments, the support part may have a shape such that the support part is divided into one or more intervals.

In embodiments, the support part may be formed extending in a horizontal direction.

In embodiments, the support part may be formed extending in a vertical direction. In embodiments, the second case may further include a reinforcement rib formed on an upper surface of an inside of the hook hole.

A battery pack according to embodiments of the present disclosure may include a plurality of battery cells and a battery case configured to accommodate the plurality of battery cells. The battery case includes a first case including a hook and a second case including a hook hole into which the hook is inserted when the first and second cases are fastened together. The second case includes a support part that supports the hook after the hook is inserted into the hook hole. In embodiments, the support part may support the hook on a rear surface of the hook when the hook is inserted into the hook hole.

In embodiments, the support part may have a shape such that the support part is curved in a direction in which the hook is inserted into the hook hole.

In embodiments, the support part may have a shape such that the support part is divided into one or more intervals.

In embodiments, the support part may be formed extending in a horizontal direction.

In embodiments, the support part may be formed extending in a vertical direction. In embodiments, the second case may further include a reinforcement rib formed on an upper surface of an inside of the hook hole.

A method of manufacturing a battery case according to embodiments of the present disclosure may include manufacturing a first case including a hook and manufacturing a second case including a hook hole into which the hook is configured to be inserted when the first and second cases are fastened together. The manufacturing of the second case includes forming a support part that supports the hook after the hook is inserted into the hook hole.

In embodiments, the forming of the support part may include forming the support part having a shape such that the support part is curved in a direction in which the hook is inserted into the hook hole.

In embodiments, the forming of the support part may include forming the support part having a shape such that the support part is divided into one or more intervals. In embodiments, the forming of the support part may include forming the support part to extend in a horizontal direction.

In embodiments, the forming of the support part may include forming the support part to extend in a vertical direction.

In embodiments, the manufacturing of the second case may further include forming a reinforcement rib on an upper surface of an inside of the hook hole.

According to embodiments of the present disclosure, the battery case including the support part that supports the hook is constructed after the hook and the hook hole are fastened. Accordingly, it is possible to maintain the state in which the hook and the hook hole have been coupled because the breakaway of the hook attributable to the retreat of the hook can be prevented when an impact is applied to the battery pack.

According to embodiments of the present disclosure, it is possible to prevent the battery pack from being dismantled because the fastening force of the battery case is maintained although an impact is applied to the battery pack.

However, aspects and features of the present disclosure are not limited to those described above, and other aspects and features not mentioned will be clearly understood by a person skilled in the art from the detailed description, described below.

At least some of the above and other features of the invention are set out in the claims.

### BRIEF DESCRIPTION OF THE DRAWINGS

The following drawings attached to this specification illustrate example embodiments of the present disclosure, and help with further understanding of the present disclosure along with the aforementioned contents of the disclosure. Accordingly, the present disclosure should not be construed as being limited to only the contents shown in and described in relation to such drawings:
FIG. 1 is a schematic diagram illustrating a cylindrical lithium secondary battery according to an example embodiment.
FIG. 2 is a schematic diagram illustrating a prismatic lithium secondary battery according to an example embodiment.
FIGS. 3 and 4 are schematic diagrams illustrating a pouch type lithium secondary battery according to an example embodiment.
FIG. 5A is a perspective view of a battery pack to which the battery case according to embodiments of the present disclosure may be applied.
FIG. 5B is an exploded view of the battery pack to which the battery case according to embodiments of the present disclosure may be applied.
FIG. 6 is a diagram illustrating a battery case according to embodiments of the present disclosure.
FIG. 7 illustrates a first embodiment of a fastening structure of the battery case according to embodiments of the present disclosure.
FIG. 8 illustrates a second embodiment of a fastening structure of the battery case according to embodiments of the present disclosure.
FIG. 9 illustrates a third embodiment of a fastening structure of the battery case according to embodiments of the present disclosure.
FIG. 10 is a flowchart illustrating a method of manufacturing a battery case according to embodiments of the present disclosure.

### DETAILED DESCRIPTION

Example embodiments of the present disclosure will be described below in detail with reference to the accompanying drawings. Prior to the description, it is noted that the terms or words used in this specification and claims should not be construed as being limited to common or dictionary meanings but instead should be understood to have meanings and concepts in agreement with the present disclosure based on the principle that an inventor can define the concept of each term suitably in order to describe his/her own invention in the best way possible.

Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of example embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of example embodiments. For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

As described herein, a battery pack including a plurality of secondary batteries accommodates a plurality of battery cells in a battery case that protects the plurality of battery cells. In general, such a battery case is divided into an upper case and a lower case and completed by accommodating battery cells in the upper case and the lower case and fastening the upper case and the lower case through an assembly process. However, when an impact is applied to the battery pack that is coupled in such a way, there is a problem in that a case in which the fastening of the upper case and the lower case is frequently released and thus the battery pack is dismantled.

The type of secondary battery may include a coin type, a cylindrical type, a prismatic type, and a pouch type. Prior to a description of embodiments of the present disclosure, first, cylindrical and prismatic secondary batteries are roughly described because the present disclosure may be basically applied to the cylindrical and prismatic secondary batteries.

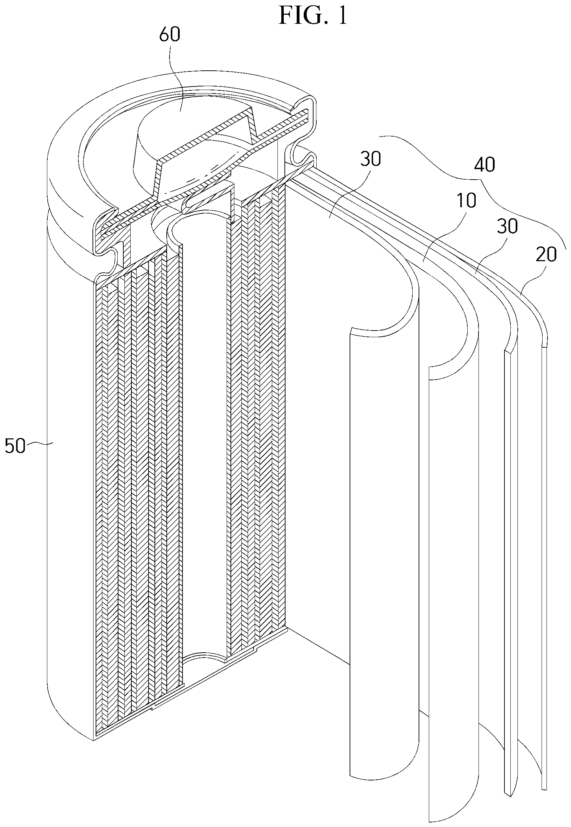

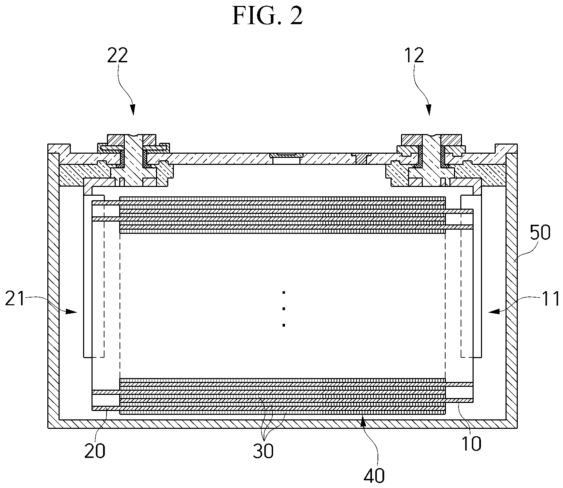

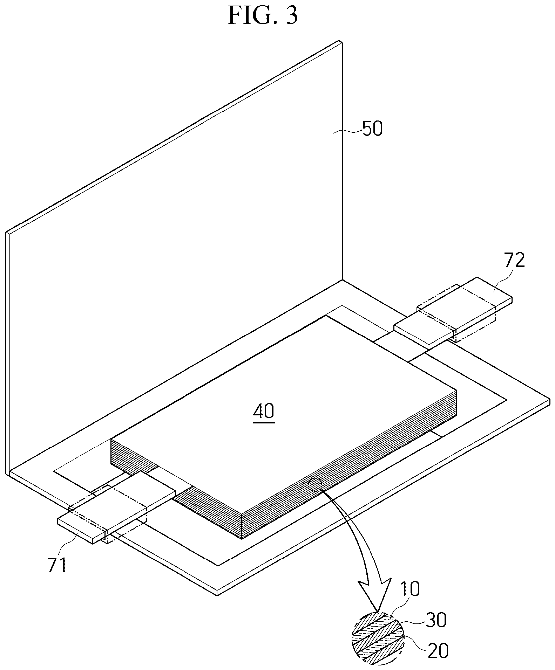

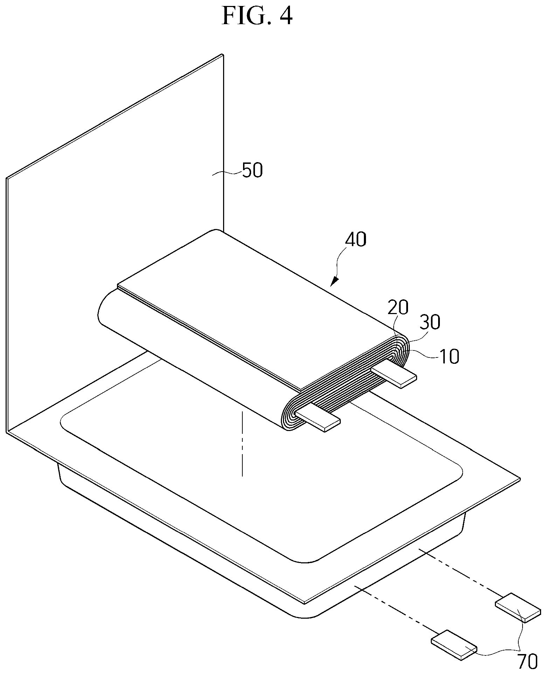

FIGS. 1 to 4 are schematic diagrams illustrating lithium secondary batteries according to example embodiments. FIG. 1 illustrates a cylindrical lithium secondary battery. FIG. 2 illustrates a prismatic type secondary battery. FIGS. 3 and 4 illustrate a pouch type secondary battery. Referring to FIG. 1 to 4, a lithium secondary battery may include an electrode assembly 40 in which a separator 30 has been interposed between a first electrode plate 10 and a second electrode plate 20, and a case 50 in which the electrode assembly 40 has been embedded. The first electrode plate 10, the second electrode plate 20, and the separator 30 may be impregnated in an electrolyte (not illustrated). As illustrated in FIG. 1, the lithium secondary battery may include a sealing member 60 that seals the case 50. Furthermore, in FIG. 2, the lithium secondary battery may include a first electrode lead tab 11, a first electrode terminal 12, a second electrode lead tab 21, and a second electrode terminal 22. As illustrated in FIGS. 3 and 4, the lithium secondary battery may include an electrode tab 70 that plays a role as an electrical passage for inducing a current formed in the electrode assembly 40 to flow toward the outside, that is, a first electrode tab 71 and a second electrode tab 72.

The electrode assembly 40 may be formed by winding or stacking a stack body including the first electrode plate 10, the second electrode plate 20, and the separator 30 each of which is formed in a plate or film shape. In the case of the winding stack body, the winding axis of the electrode assembly 40 may be parallel to the length direction of the case. Furthermore, in some embodiments, the electrode assembly 40 may be the stack type not the winding type, but a shape of the electrode assembly 40 is not limited thereto. The first electrode plate 10 of the electrode assembly 40 may be a positive electrode, and the second electrode plate 20 thereof may be a negative electrode, and vice versa.

The first electrode plate 10 may be formed by applying a first electrode active material, such as graphite or carbon, to a first electrode collector plate formed of metal foil, such as copper, a copper alloy, nickel, or a nickel alloy, and may include a first electrode tab (or a first uncoated part), that is, an area to which the first electrode active material has not been applied.

The second electrode plate 20 may be formed by applying a second electrode active material, such as transition metal oxide, to a material formed of metal foil, such as aluminum or an aluminum alloy, and may include a second electrode tab (or a second uncoated part), that is, an area to which the second electrode active material has not been applied.

The separator 30 may function to prevent a short-circuit between the first electrode plate 10 and the second electrode plate 20 while permitting movement of lithium ions. The separator 30 may be composed of a polyethylene film, a polypropylene film, or a polyethylene-polypropylene film, for example.

A plurality of secondary batteries such as those shown and described in FIGS. 1 to 4 may be gathered to constitute a plurality of battery cells and may be accommodated in a battery case 100. A battery case 100 according to embodiments of the present disclosure may include a support part 123 that supports a hook 111 after the hook 111 and a hook hole 121 are fastened, and can maintain the state in which the hook 111 and the hook hole 121 have been fastened because the breakaway of the hook 111 attributable to the retreat of the hook 111 can be prevented when an impact is applied to a battery pack 1. Hereinafter, a battery case 100 according to embodiments of the present disclosure and a method of manufacturing the battery case 100 are described with reference to the drawings.

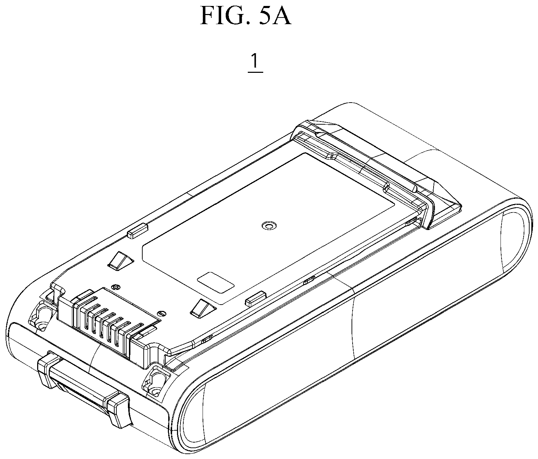

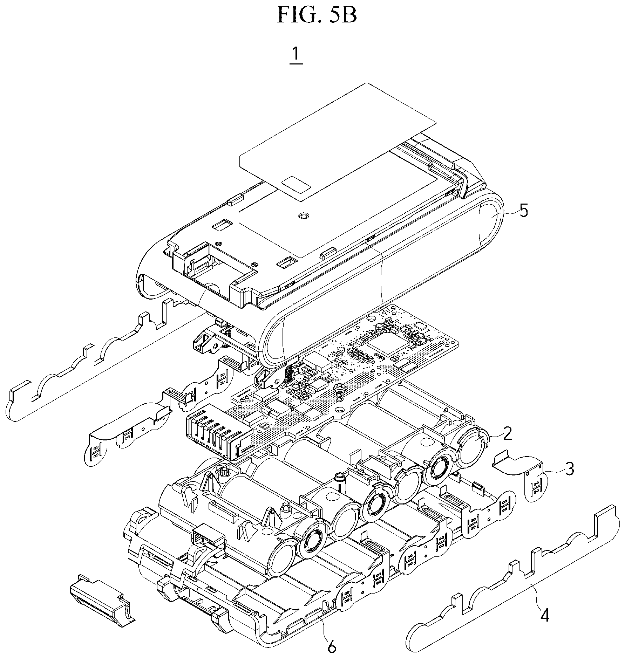

FIG. 5A is a perspective view of a battery pack 1 to which the battery case 100 according to embodiments of the present disclosure may be applied. FIG. 5B is an exploded view of the battery pack 1 to which the battery case 100 according to embodiments of the present disclosure may be applied.

FIGS. 5A and 5B illustrate a structure of the battery pack 1 to which the battery case 100 according to embodiments of the present disclosure may be applied.

The battery pack 1 may be manufactured by accommodating a battery cell 2, an electrode tab 3, an insulator 4, with the addition of one or more other components, in some embodiments, in an upper case 5 and a lower case 6. In an assembly process of the battery pack 1, the upper case 5 and the lower case 6 may be fastened after the battery cell 2, the electrode tab 3, the insulator 4, etc. are accommodated in the upper case 5 and the lower case 6. However, when an impact is applied to the battery pack 1 that is formed after the upper case 5 and the lower case 6 are fastened as described above, the fastening of the upper case 5 and the lower case 6 - in the absence of the battery case 100 according to embodiments of the present disclosure - may be frequently released due to the applied impact, and thus the battery pack 1 may be dismantled.

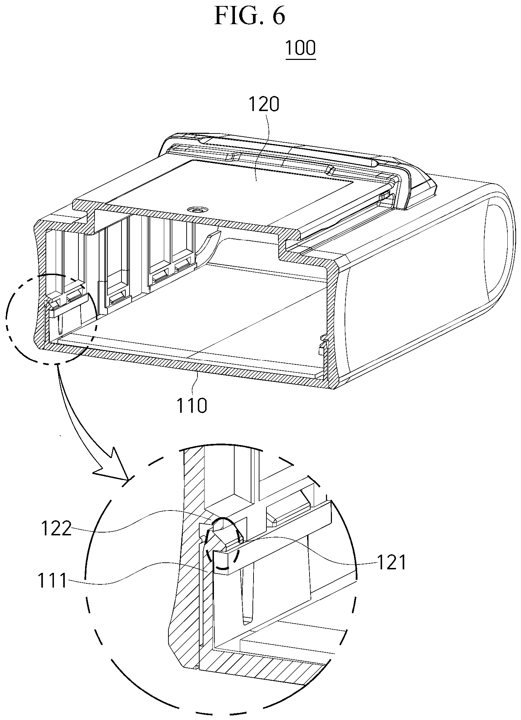

FIG. 6 is a diagram illustrating a battery case 100 according to embodiments of the present disclosure.

Referring to FIG. 6, the battery case 100 according to embodiments of the present disclosure may include a first case 110 and a second case 120.

The first case 110 may include the hook 111. In FIG. 6, the first case 110 has been illustrated as a lower case, but the present disclosure is not limited thereto. The first case 110 may be an upper case, in some embodiments. The hook 111 may be extended and formed from a bottom surface of the first case 110.

The second case 120 may include the hook hole 121 into which the hook 111 is inserted. In FIG. 6, the second case 120 has been illustrated as an upper case, but the present disclosure is not limited thereto. The second case 120 may be a lower case, in some embodiments. The hook hole 121 may be formed in a part of the side of the second case 120.

In the battery case 100 according to embodiments of the present disclosure, as the hook 111 of the first case 110 is inserted into and fastened to the hook hole 121 of the second case 120, the first case 110 and the second case 120 may be coupled. In this case, the second case 120 may include a trapping part 122 that holds the hook 111 from above when the hook 111 is inserted into the top of the outside of the hook hole 121.

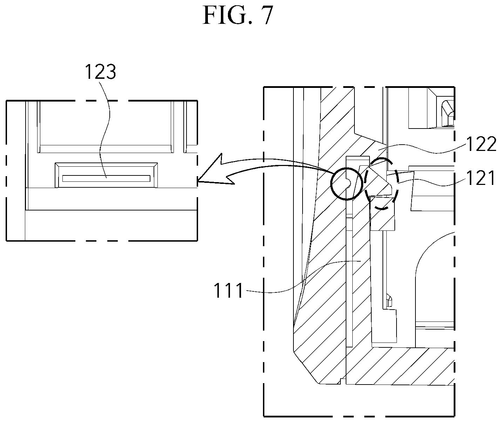

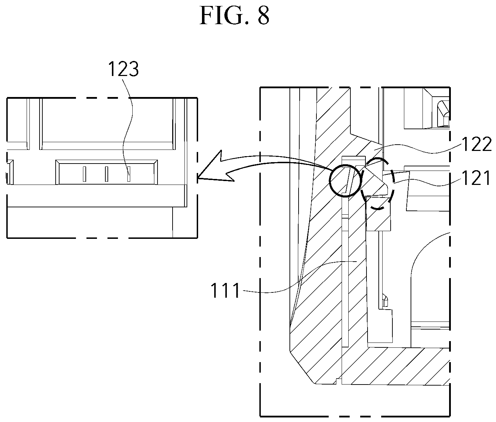

In embodiments, the second case 120 may include a support part 123 that supports the hook 111 after the hook 111 is inserted into and fastened to the hook hole 121. Hereinafter, the support part 123 is described with reference to FIGS. 7 and 8.

FIG. 7 illustrates a first embodiment of a fastening structure of the battery case 100 according to embodiments of the present disclosure.

Referring to FIG. 7, the support part 123 may support the hook 111 on a rear surface thereof when the hook 111 is fastened in the hook hole 121. As illustrated in FIG. 7, the support part 123 may be formed to be elongated in a horizontal direction. In this case, the size of the support part 123 may be determined by considering resistance that is applied to the hook 111 when the hook 111 and the hook hole 121 are fastened.

Furthermore, the support part 123 may have a shape in which the support part 123 is curved in a direction in which the hook 111 is inserted into the hook hole 121. For example, as illustrated in FIG. 7, the support part 123 may have a cross section having a semicircular shape. If the support part 123 has the shape in which the support part 123 is curved as described above, the hook 111 and the hook hole 121 can be easily fastened because resistance of the hook 111 is reduced when the hook 111 is inserted into the hook hole 121.

FIG. 8 illustrates a second embodiment of a fastening structure of the battery case 100 according to embodiments of the present disclosure.

Referring to FIG. 8, the support part 123 may support the hook 111 on a rear surface thereof when the hook 111 is fastened. As illustrated in FIG. 8, the support part 123 may be formed in a vertical direction. Furthermore, the support part 123 may have a shape in which the support part 123 has been divided into one or more intervals. In this case, the number of divisions of the support part 123 may be determined by considering resistance that is applied to the hook 111 when the hook 111 and the hook hole 121 are fastened.

If the support part 123 has the shape in which the support part has been divided into one or more intervals as described above, the hook 111 and the hook hole 121 can be easily fastened because resistance of the hook 111 is reduced when the hook 111 is inserted into the hook hole 121.

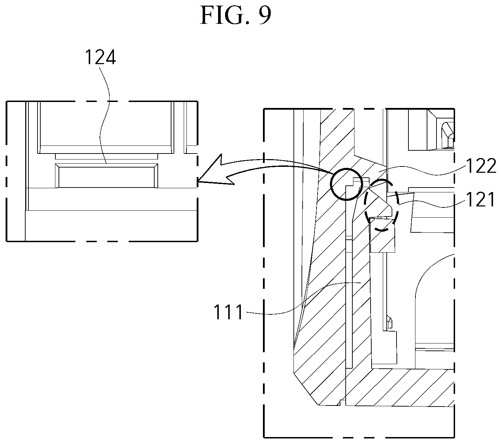

FIG. 9 illustrates a third embodiment of a fastening structure of the battery case 100 according to embodiments of the present disclosure.

Referring to FIG. 9, the second case 120 may include a reinforcement rib 124 that is formed on an upper surface of the inside of the hook hole 121. The reinforcement rib 124 can reduce the amount of instant elongation when an impact is applied to the battery pack 1 so that the fastening force of the hook 111 and the hook hole 121 can be maintained. In embodiments, the reinforcement rib 124 may be formed along with the support part 123, and can prevent the breakaway of the hook 111 attributable to the retreat of the hook 111 from the hook hole 121 when an impact is applied to the battery pack 1.

According to embodiments of the present disclosure, the battery case 100 including the support part 123 that supports the hook 111 is fastened after the hook 111 and the hook hole 121 are fastened. Accordingly, the state in which the hook 111 and the hook hole 121 have been fastened can be maintained because the breakaway of the hook 111 attributable to the retreat of the hook 111 can be prevented when an impact is applied to the battery pack 1.

According to embodiments of the present disclosure, the battery pack 1 can be prevented from being dismantled because the fastening force of the battery case 100 is maintained although an impact is applied to the battery pack 1.

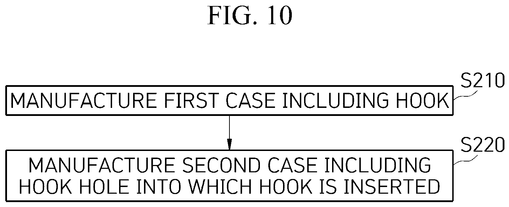

FIG. 10 is a flowchart illustrating a method of manufacturing a battery case 100 according to embodiments of the present disclosure.

As illustrated in FIG. 10, the method of manufacturing a battery case 100 according to embodiments of the present disclosure may include steps S210 to S220.

Step S210 may be a step of manufacturing the first case 110 including the hook 111.

Step S220 may be a step of manufacturing the second case 120 including the hook hole 121 into which the hook 111 is inserted. In embodiments, step S220 may include a step of forming the support part 123 that supports the hook 111 after the hook 111 is inserted into and fastened to the hook hole 121.

The aforementioned method of manufacturing a battery case 100 according to embodiments of the present disclosure has been described with reference to the flowcharts presented in the drawings. For a simple description, the method has been illustrated and described as a series of blocks, but the present disclosure is not limited to the sequence of the blocks, and some blocks may be performed in a sequence different from or simultaneously with that of other blocks, which has been illustrated and described in this specification. Various other branches, flow paths, and sequences of blocks which achieve the same or similar results may be implemented. Furthermore, all the blocks illustrated in order to implement the method described in this specification may not be required.

In the description given with reference to FIG. 10, each of the steps may be further divided into additional steps or the steps may be combined into smaller steps depending on an example embodiment of the present disclosure. Furthermore, some of the steps may be omitted, if necessary, and the sequence of the steps may be changed. Furthermore, the contents of FIGS. 1 to 9, although some contents are omitted from the contents of FIGS. 1 to 9, may be applied to the contents of FIG. 10. Furthermore, the contents of FIG. 10 may be applied to the contents of FIGS. 1 to 9.

Hereinafter, materials which may be used in a secondary battery according to an embodiment of the present disclosure are described.

A compound (e.g., a lithiated intercalation compound) capable of reversible intercalation and deintercalation of lithium may be used as a positive electrode active material. Specifically, one or more types of material selected among complex oxides of metal, selected among cobalt, manganese, nickel, and a combination thereof, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination thereof.

For example, a compound that is represented as one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤ a ≤ 1.8, 0 ≤ b ≤ 0.5, 0 ≤ c ≤ 0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤ 1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001 ≤ b ≤ 0.1); LiₐCoG_{b}O₂ (0.90≤a≤1.8, 0.001 ≤b≤0.1); LiₐMn_{1-b}G_{b}O₂ (0.90≤a≤1.8, 0.001 ≤ b≤0.1); LiₐMn₂G_{b}O₄ (0.90≤a≤1.8, 0.001 ≤b≤0.1); LiₐMn_{1-g}G_{g}PO₄ (0.90≤a≤ 1.8, 0≤g≤0.5); Li_{(3-f)}Fe₂(PO₄)₃(0≤f≤2); and LiₐFePO₄(0.90≤a≤1.8).

In the chemical formula, A may be Ni, Co, Mn, or a combination thereof. X may be Al, Ni, Co, Mn, Cr, Fe, Mg, Sr, V, a rare earth element, or a combination thereof; D may be O, F, S, P, or a combination thereof. G may be Al, Cr, Mn, Fe, Mg, La, Ce, Sr, V, or a combination thereof. L¹ may be Mn, Al, or a combination thereof. A positive electrode for a lithium secondary battery may include a current collector and a positive electrode active material layer formed on the current collector. The positive electrode active material layer may include the positive electrode active material, and may further include a binder and/or a conductive material. Content of the positive electrode active material may be 90 wt.% to 99.5 wt.% with respect to the positive electrode active material layer 100 wt.%. Content of the binder and the conductive material may be 0.5 wt.% to 5 wt.% with respect to the positive electrode active material layer 100 wt.%.

Al may be used as the current collector, but the present disclosure may not be limited thereto.

A negative electrode active material may include a material capable of reversible intercalation/de-intercalation with respect to lithium ions, lithium metal, an alloy of lithium metal, a material capable of doping and dedoping with respect to lithium, or transition metal oxide.

The material capable of reversible intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination thereof.

The silicon-carbon composite may be a composite of silicon and amorphous carbon. According to an example embodiment, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example the negative electrode active material layer may include the negative electrode active material of 90 wt.% to 99 wt.%, the binder of 0.5 wt.% to 5 wt.%, and the conductive material of 0 wt.% to 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity. One material selected among nickel foil, stainless steel foil, titanium foil, nickel foam, copper foam, a polymer base on which a conductive metal has been coated, and a combination thereof may be used as a current collector for the negative electrode.

An electrolyte for a lithium secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination thereof. The carbonate-based, ester-based, ether-based, ketone-based, or alcohol-based solvent, or the aprotic solvent may be used solely, or two types or more thereof may be mixed and used as the nonaqueous organic solvent. Furthermore, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers thereof may be used as the separator.

The separator may include a porous base, and a coating layer including an organic matter, an inorganic matter, or a combination thereof that is disposed on one or both sides of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic matter and the inorganic matter may have a form in which the organic matter and the inorganic matter have been mixed in one coating layer or a form in which a coating layer including the organic matter and a coating layer including the inorganic matter have been stacked.

Although the present disclosure has been described above in connection with the limited embodiments and drawings, the present disclosure is not limited to the specific embodiments provided herein. A person having ordinary knowledge in the art to which the present disclosure pertains may modify and change the present disclosure within the technical spirit of the present disclosure and the equivalent range of the following claims.

## Claims

1. A battery case that accommodates a plurality of battery cells, the battery case comprising:
a first case comprising a hook; and
a second case comprising a hook hole into which the hook is inserted when the first and second cases are fastened together,
wherein the second case comprises a support part that supports the hook after the hook is inserted into the hook hole.

2. The battery case as claimed in claim 1, wherein the support part supports the hook on a rear surface of the hook when the hook is inserted into the hook hole.

3. The battery case as claimed in claim 1 or 2, wherein the support part has a shape such that the support part is curved in a direction in which the hook is inserted into the hook hole.

4. The battery case as claimed in claim 1 or 2, wherein the support part has a shape such that support part is divided into one or more intervals.

5. The battery case as claimed in any preceding claim, wherein the support part is formed extending in a horizontal direction.

6. The battery case as claimed in any preceding claim, wherein the support part is formed extending in a vertical direction.

7. The battery case as claimed in any preceding claim, wherein the second case further comprises a reinforcement rib formed on an upper surface of an inside of the hook hole.

8. A battery pack comprising:
a plurality of battery cells; and
the battery case of any one of claims 1 to 7.

9. A method of manufacturing a battery case, comprising:
manufacturing a first case comprising a hook; and
manufacturing a second case comprising a hook hole into which the hook is configured to be inserted when the first and second cases are fastened together,
wherein the manufacturing of the second case comprises forming a support part that supports the hook after the hook is inserted into the hook hole.

10. The method as claimed in claim 9, wherein the forming of the support part comprises forming the support part having a shape such that the support part is curved in a direction in which the hook is inserted into the hook hole.

11. The method as claimed in claim 9, wherein the forming of the support part comprises forming the support part having a shape such that the support part is divided into one or more intervals.

12. The method as claimed in claim 9, 10 or 11, wherein the forming of the support part comprises forming the support part to extend in a horizontal direction.

13. The method as claimed in any one of claims 9 to 12, wherein the forming of the support part comprises forming the support part to extend in a vertical direction.

14. The method as claimed in any one of claims 9 to 13, wherein the manufacturing of the second case further comprises forming a reinforcement rib on an upper surface of an inside of the hook hole.
